# EUROPÄISCHE PATENTSCHRIFT

(11) **EP 2 880 325 B1**
(45) Veröffentlichungstag und Bekanntmachung des Hinweises auf die Patenterteilung: **28.09.2016**
(21) Anmeldenummer: 13747960.6
(22) Anmeldetag: 16.07.2013
(51) Int. Cl.: F16D 13/58, F16D 13/46, F16D 13/40

(54) **DOPPELKUPPLUNG**
DUAL CLUTCH
DOUBLE EMBRAYAGE

(30) Priorität: 03.08.2012 DE 102012213805
(43) Veröffentlichungstag der Anmeldung: 10.06.2015
(73) Patentinhaber: Schaeffler Technologies AG & Co. KG, 91074 Herzogenaurach (DE)
(72) Erfinder: FÜNFGELD, Simon, Sebastian, 71297 Mönsheim (DE); WEYDMANN, Patrick, 77815 Bühl (DE); GANDER, Gerhard, 77830 Bühlertal (DE); OBITZ, Alexander, 77815 Bühl (DE)
(86) Internationale Anmeldenummer: PCT/DE2013/200053
(87) Internationale Veröffentlichungsnummer: WO 2014/019577

(56) Entgegenhaltungen:
- EP-A1- 1 388 679
- EP-A2- 0 235 882
- EP-A2- 1 413 795
- AU-A- 7 587 974
- FR-A1- 2 642 485
- FR-A1- 2 807 127
- FR-A1- 2 859 773
- GB-A- 2 136 064
- US-A- 5 927 459
- US-E1- R E38 389

## Beschreibung

Die Erfindung betrifft eine Doppelkupplung zum Kuppeln einer Antriebswelle eines Kraftfahrzeugmotors mit einer Getriebewelle eines Kraftfahrzeuggetriebes und/oder einem Nebenantrieb des Kraftfahrzeuges. Eine solche Doppelkupplung ist z.B. aus der EP 1 413 795 bekannt. Derartige Kupplungsaggregate finden beispielsweise Verwendung bei Traktoren oder anderen Arbeitsmaschinen für die Landwirtschaft. Dabei dient eine erste Reibungskupplung für den Fahrbetrieb und eine zweite Reibungskupplung zum unabhängigen Zuschalten und Abschalten eines zusätzlichen Nebenabtriebes, mittels dessen zusätzliche Aggregate antreibbar sind. Die zweite Reibungskupplung ist üblicherweise in einem nicht eingerückten Zustand geöffnet, beispielsweise beim Starten des Kraftfahrzeugmotors, und kann in einem eingerückten Zustand benötigte Leistung direkt von der Antriebswelle abnehmen. Durch die unabhängige Betätigung der zweiten Reibungskupplung kann der Nebenantrieb im Stand oder auch während der Fahrt des Kraftfahrzeuges eingesetzt werden. Mit der zweiten Reibungskupplung können beispielsweise Mähmaschinen und andere landwirtschaftliche Anbaugeräte wie mechanische oder hydraulische Winden, Hydraulikpumpen oder Kompressoren angetrieben werden, die im Gegensatz zu elektrischen Geräten deutlich mehr Leistung bieten und ein elektrisches Bordnetz des Kraftfahrzeuges nicht belasten. Diese Doppelkupplungen weisen jedoch üblicherweise eine große Toleranzabhängigkeit der Anpresskraft und der Einrückkräfte auf, sowie eine spannungskritische Belastung des Betätigungssystems insbesondere der zweiten Reibungskupplung der Doppelkupplung bei einem Einrücken. Es ist daher die Aufgabe der Erfindung, eine Doppelkupplung bereitzustellen, die in Absenken der Toleranzabhängigkeit von Anpresskraft und/oder Einrückkraft ermöglicht, und eine Reduzierung der Spannungen im Betätigungssystem ermöglicht.

Die Lösung der Aufgabe erfolgt erfindungsgemäß durch die Merkmale des Anspruchs 1. Bevorzugte Ausgestaltungen der Erfindung sind in den Unteransprüchen angegeben, die jeweils einzeln oder in Kombination einen Aspekt der Erfindung darstellen können.

Erfindungsgemäß ist eine Doppelkupplung zum Kuppeln einer Antriebswelle eines Kraftfahrzeugmotors mit einer Getriebewelle eines Kraftfahrzeuggetriebes und/oder einem Nebenabtrieb des Kraftfahrzeuges, insbesondere einer Zapfwelle, vorgesehen mit einer ersten Reibungskupplung zum reibschlüssigen Verpressen einer mit der Getriebewelle koppelbaren ersten Kupplungsscheibe zwischen einer ersten Anpressplatte und einer ersten Gegenplatte, wobei die erste Anpressplatte zum Schließen der ersten Reibungskupplung in eine Axialrichtung verlagerbar ist, einer zweite Reibungskupplung zum reibschlüssigen Verpressen einer mit dem Nebenabtrieb koppelbaren zweiten Kupplungsscheibe zwischen einer zweiten Anpressplatte und einer zweiten Gegenplatte, wobei die zweite Anpressplatte zum Schließen der zweiten Reibungskupplung in die Axialrichtung verlagerbar ist, einem ersten Betätigungselement zum Verlagern der ersten Anpressplatte, einem zweiten Betätigungselement zum Verlagern der zweiten Anpressplatte, wobei die zweite Anpressplatte mit einem mit dem zweiten Betätigungselement wirkverbundenen Druckring zur Übertragung der Verlagerungsbewegung verbunden ist. Erfindungsgemäß das zweite Betätigungselemente durch mindestens einen Spanndrahtring vorgespannt.

Die erste Kupplungsscheibe kann über eine Verzahnung mit der Getriebewelle drehfest, aber axial beweglich verbunden sein, die zweite Kupplungsscheibe kann über eine Verzahnung mit dem Nebentrieb drehfest, aber axial beweglich verbunden sein. Die jeweilige Kupplungsscheibe der zugeordneten Reibungskupplung kann insbesondere an voneinander wegweisenden axialen Stirnflächen jeweils einen Reibbelag aufweisen, der mit einem gegebenenfalls vorgesehenen Reibbelag der zugehörigen Gegenplatte und/oder Anpressplatte reibschlüssig in Kontakt kommen kann, um die jeweilige Reibungskupplung zu schließen. Die Doppelkupplung, insbesondere die erste Reibungskupplung der Doppelkupplung, kann einen Schwingungsdämpfer aufweisen. Als Schwingungsdämpfer kann beispielsweise ein Zweimassenschwungrad und/oder ein Fliehkraftpendel und/oder ein Massependel verwendet werden, welches beispielsweise an der ersten Kupplungsscheibe angeordnet sein kann. Die Doppelkupplung kann eine unabhängig betätigbare erste Reibungskupplung in Form einer Blechdeckeleinfachkupplung aufweisen, um einen Kraftschluss zwischen dem Kraftfahrzeugmotor, insbesondere der Antriebswelle des Kraftfahrzeugmotors, und der Getriebewelle zum Antrieb des Kraftfahrzeuges herzustellen. Die zweite Reibungskupplung kann in Form einer Nebenabtriebskupplung als Unterbau an der ersten Reibungskupplung angeordnet sein, beispielsweise zwischen der ersten Reibungskupplung und einer Schwungscheibe des Kraftfahrzeugmotors. Die Nebenabtriebskupplung, beispielsweise eine Zapfwelle eines Traktors, kann als Sicherheitszapfwellenkupplung ausgebildet sein, wobei bei einem Fehler am Einrückmechanismus, insbesondere dem zweiten Betätigungselement, die Nebenabtriebskupplung sofort öffnet und der abgekoppelte Nebenabtrieb zum Stillstand kommen kann. Der Nebenabtrieb kann in Form einer direkt angetriebenen Motorzapfwelle ausgebildet sein, welche über die zweite Reibungskupplung direkt mit dem Kraftfahrzeugmotor verbindbar ist, und somit unabhängig von einer Fortbewegung des Kraftfahrzeuges mit der Motordrehzahl des Kraftfahrzeugmotors betrieben werden kann. Nebenabtriebskupplungen können üblicherweise nach der Abkürzung des englischen Begriffes Power take-off als PTO bezeichnet, wobei eine Sicherheitsnebenabtriebskupplung, oder Sicherheitskupplung, als Safety-PTO bezeichnet werden kann.

Die erste Reibungskupplung ist durch eine zumindest teilweise axiale Verlagerung des ersten Betätigungselementes betätigbar, wobei die erste Anpressplatte in axialer Richtung zu der ersten Gegendruckplatte hin verlagert werden kann, wobei durch ein reibschlüssiges Verpressen der ersten Kupplungsscheibe zwischen der ersten Anpressplatte und der ersten Gegenplatte ein Kraftschluss zwischen dem Kraftfahrzeugmotor und der Getriebewelle zum Antrieb des Kraftfahrzeuges hergestellt werden kann. Das erste Betätigungselement kann beispielsweise in Form einer ersten Hebelfeder ausgebildet sein, welche unabhängig von einem zweiten Betätigungselement betätigbar ist. Unabhängig von der ersten Reibungskupplung ist die zweite Reibungskupplung mittels des zweiten Betätigungselementes und eines Druckrings einrückbar, um einen Kraftschluss zwischen dem Kraftfahrzeugmotor und dem Nebenabtrieb, beispielsweise einer Zapfwelle, herzustellen. Der Druckring kann dabei topfähnliche oder topfförmig ausgebildet sein und die erste Reibungskupplung, welche innerhalb eines Kupplungsdeckels angeordnet sein kann, außenseitig umfassen, wobei der Kupplungsdeckel zumindest teilweise von dem Druckring umfasst werden kann. Der Druckring ist dabei mit der zweiten Anpressplatte der zweiten Reibungskupplung verbunden. Die zweite Reibungskupplung kann dabei in einem unbetätigten Zustand geöffnet sein. Das Einrücken des Druckringes und damit der zweiten Anpressplatte erfolgt über eine Betätigung des zweiten Betätigungselementes, welches stirnseitig an dem Kupplungsdeckel der ersten Reibungskupplung auf einer der ersten und der zweiten Anpressplatte abgewandten Seite mittels angeordnet sein kann. Das zweite Betätigungselement kann dabei mittels an dem Kupplungsdeckel der ersten Reibungskupplung befestigter Bolzen und einem an den Bolzen angeordneten Auflagedrahtring beweglich gelagert sein. Der Auflagedrahtring kann radial außenseitig um die Bolzen gespannt sein, wobei das zweite Betätigungselement in Form einer zweiten Hebelfeder den Auflagedrahtring und/oder die Bolzen derart kontaktiert, dass die Hebelfeder, insbesondere bei einer Betätigung des zweiten Betätigungselementes, kippbar an dem Auflagedrahtring und/oder den bolzen gelagert ist.

Der mindestens eine Spanndrahtring kann lösbar mit dem zweiten Betätigungselement verbunden sein. Der Spanndrahtring kann radial innenseitig des Auflagedrahtringes angeordnet sein. Mehrere Spanndrahtringe können konzentrisch und/oder in axial benachbart angeordnet sein. Das zweite Betätigungselement kann durch den daran befestigten Spanndrahtring in einem elastisch verformten, vorgespannten Zustand gehalten werden. Durch die elastische Verformung des zweiten Betätigungselementes durch die Montage des Spanndrahtringes kann eine Vorspannkraft in axialer Richtung, insbesondere in eine der zweiten Anpressplatte abgewandten axialen Richtung, in dem zweiten Betätigungselement bewirkt werden. Eine Einrückkraft zur Betätigung der zweiten Reibungskupplung, welche radial innenseitig auf das zweite Betätigungselement wirken kann, kann durch die voneinander beabstandete Lagerung und/oder Kontaktierung des zweiten Betätigungselementes an dem Auflagedrahtring und dem Druckring eine Übersetzung der auf den Druckring übertragenen Einrückkraft bewirken.

Beim Einrücken infolge einer Einrückkraft besitzt das zweite Betätigungselement zunächst eine hohe Steifigkeit, bis die Einrückkraft die Vorspannkraft des zweiten Betätigungselementes überschreitet. Mit Übersteigen der Vorspannkraft des vorgespannten zweiten Betätigungselementes kann das zweite Betätigungselement entgegen seiner Vorspannkraft weiter elastisch verformt werden, wobei die durch den Druckring auf die zweite Anpressplatte übertragene Anpresskraft der zweiten Reibungskupplung nach Überwindung der Vorspannung auf einer flacher Kraftkennlinie verlaufen kann. Durch das vorgespannte zweite Betätigungselement können in dem zweiten Betätigungselement zwei Steifigkeiten unterschiedlicher Größe integriert werden. Dadurch kann die Anpresskraft entsprechend der gewählten Steifigkeiten zwei Bereiche mit einem unterschiedlichen Verlauf der Kraftkennlinie aufweisen, beispielsweise in Form eines abgewinkelten Kennlinienverlaufes mit einem im Wesentlichen linearen steileren Anstieg der Anpresskraft in einem ersten Abschnitt und einem im Wesentlichen linearen flacher verlaufenden zweiten Abschnitt. Dadurch kann in dem zweiten Bereich ein flacherer Verlauf der Kennlinie der Anpresskraft der zweiten Anpressplatte über den im Betrieb relevanten Einrückweg sowohl in einem Neuzustand als auch in einem Verschleißzustand der zweiten Reibungskupplung gewährleistet werden. Somit kann eine Reduzierung der Anpresskraft im Verschleißfall vermieden werden und die Toleranzabhängigkeit der Anpresskraft und/oder Einrückkraft verringert werden. Durch die Integration zweier Steifigkeiten in das vorgespannte zweite Betätigungselement kann bei geringem Bauraum beim Einrücken eine anfänglich hohe Steifigkeit mit einer geringeren Steifigkeit in dem Eingerückten Zustand kombiniert werden, wodurch die Spannungen im Betätigungssystem bei einer Betätigung der zweiten Reibungskupplung verringert werden können.

In einer bevorzugten Ausführungsform ist das zweite Betätigungselement eine Hebelfeder mit nach radial innen gerichteten Hebelfederzungen, wobei der Spanndrahtring an den Hebelfederzungen angeordnet ist. Der Spanndrahtring kann radial innenseitig des Auflagedrahtringes, vorzugsweise radial innenseitig der Kontaktbereiche zwischen zweitem Betätigungselement und Druckring, angeordnet sein. Der Spanndrahtring kann im Wesentlichen mittig an den sich nach radial innen erstreckenden Hebelfederzungen angeordnet sein und kann die Hebelfederzungen kontaktieren. In einem unmontierten Zustand können die Hebelfederzungen der Hebelfeder in axialer Richtung, insbesondere in eine der zweiten Anpressplatte abgewandten Richtung, aufgestellt sein. Durch die Montage des Spanndrahtringes können die Hebelfederzungen in axialer Richtung, beispielsweise zu der zweiten Anpressplatte hin, elastisch verformt werden und in dieser Position durch den Spanndrahtring gehalten werden. Dadurch kann durch den Spanndrahtring in der Hebelfeder, insbesondere den Hebelfederzungen, eine axiale Vorspannkraft erzeugt werden. Die Einrückkraft kann radial innen an freien Enden der Hebelfederzungen angreifen. Bei dem Einrücken infolge der Einrückkraft kann zunächst eine Verformung der Hebelfederzungen in einem radial innenliegenden Bereich, im Bereich der freien Hebelfederenden, erfolgen, solange die Einrückkraft kleiner ist als die Vorspannkraft. Bei Überschreiten der Vorspannkraft kann die elastische Verformung und Auslenkung der gesamten Hebelfederzungen erfolgen. Die Hebelfederzungen können während des Einrückens mit der übersetzten Einrückkraft auf den Druckring wirken. Nach dem Überschreiten der Vorspannkraft kann die Anpresskraft auf einer flacheren Kennlinie verlaufen, als zu Beginn des Einrückens. Durch die vorgespannten Hebelfederzungen können in der Hebelfeder zwei unterschiedliche Steifigkeiten integriert werden. Dadurch kann ein Abnehmen der Anpresskraft im Verschleißbereich sowie die Toleranzabhängigkeit der Anpresskraft und Einrückkraft gering gehalten werden.

Besonders bevorzugt weist die Hebelfeder Trägerzungen zur Lagerung des Spanndrahtringes auf. Zur Lagerung des Spanndrahtringes kann die Hebelfeder mindestens zwei Trägerzungen aufweisen. Der Spanndrahtring kann an den Trägerzungen angeordnet und/oder befestigt sein, wodurch eine gezielte Befestigung beispielsweise ohne eine Beeinflussung der Hebelfederzungen ermöglicht werden kann.

In einer bevorzugten Ausführungsform sind die Hebelfederzungen und die Trägerzungen alternierend angeordnet. Durch die alternierende, abwechselnde Anordnung von Hebelfederzungen und Trägerzungen, wobei der Spanndrahtring an den Trägerzungen befestigt sein kann, kann eine verbesserte Abstützung der Hebelfederzungen an dem Spanndrahtring ermöglicht werden, da der Spanndrahtring zu jeder Seite einer Hebelfederzunge befestigt sein kann.

In einer besonders bevorzugten Ausführungsform weisen die Trägerzungen Befestigungselemente zur Befestigung des Spanndrahtringes an den Trägerzungen auf. Der Spanndrahtring kann formschlüssig an den Trägerzungen gelagert sein. Vorzugsweise kann der Spanndrahtring radial außenseitig um die Befestigungselemente angeordnet und verspannt sein. Die Befestigungselemente können einstückig mit den jeweiligen Trägerzungen ausgebildet sein, beispielsweise in Form von umgeformten Blechlaschen. Vorzugsweise können die Befestigungselemente in Form von in den Trägerzungen angeordneten Nieten ausgebildet sein.

Vorzugsweise weisen die Trägerzungen radial nach innen gerichtet eine geringere Länge auf als die Hebelfederzungen. Dadurch kann ein unbeabsichtigter Kontakt bei radial innenseitiger Betätigung und damit Verlagerung der Hebelfederzungen vermieden werden.

Besonders bevorzugt weisen die Trägerzungen zumindest teilweise eine Profilierung auf. Die Profilierung kann sich zumindest entlang eines Teils der Trägerzunge, insbesondere in radialer Richtung, erstrecken. Die Trägerzungen können jeweils gleiche und/oder unterschiedliche Profilierungen aufweisen. Durch die Profilierung der Trägerzungen können die Flächenträgheitsmomente der Trägerzungen erhöht werden, wodurch die Steifigkeit der Trägerzungen weiter erhöht werden kann.

In einer bevorzugten Ausführungsform ist die Profilierung in Form einer Sicke ausgebildet. Die Sicke zur Erhöhung der Steifigkeit der Trägerzunge, insbesondere gegen eine Verformung in axialer Richtung, kann sich entlang eines Teils oder über die gesamte Länge der Trägerzunge erstrecken. Vorzugsweise kann sich die Sicke von radial außen bis zum Befestigungselement erstrecken. Die Sicke kann durch Umformen, beispielsweise Prägen, der Trägerzunge kostengünstig hergestellt werden.

Die Erfindung betrifft ferner einen Getriebestrang für ein Kraftfahrzeug mit mindestens einer Doppelkupplung, die wie vorstehend beschrieben aus- und weitergebildet sein kann, zum Kuppeln einer Antriebswelle eines Kraftfahrzeugmotors mit einer Getriebewelle eines Kraftfahrzeuggetriebes und/oder einem Nebenabtrieb des Kraftfahrzeuges. Dadurch kann eine Reduzierung der Anpresskraft im Verschleißfall vermieden werden und die Toleranzabhängigkeit der Anpress- bzw. Betätigungskraft verringert werden.

Nachfolgend wird die Erfindung unter Bezugnahme auf die anliegenden Zeichnungen anhand bevorzugter Ausführungsbeispiele exemplarisch erläutert, wobei die nachstehend dargestellten Merkmale sowohl jeweils einzeln als auch in Kombination einen Aspekt der Erfindung darstellen können.

Es zeigen:
- Fig. 1:: eine schematische erste Schnittansicht einer erfindungsgemäßen Doppelkupplung;
- Fig. 2:: eine Gesamtansicht einer erfindungsgemäßen Doppelkupplung;
- Fig. 3a:: eine zweites Betätigungselement mit einem Spanndrahtring;
- Fig. 3b:: eine geschnittene Ansicht des unmontierten zweiten Betätigungselementes;
- Fig. 4a:: das zweites Betätigungselement aus Fig. 3a mit montiertem Spanndrahtring;
- Fig. 4b:: eine geschnittene Ansicht des vorgespannten zweiten Betätigungselementes;
- Fig. 5:: einen Druckring mit vorgespanntem zweites Betätigungselement sowie Befestigungsbolzen mit einem Auflagedrahtring; und
- Fig. 6:: ein Diagramm zur Darstellung der Kraftkennlinien einer Anpresskraft sowie einer Einrückkraft.

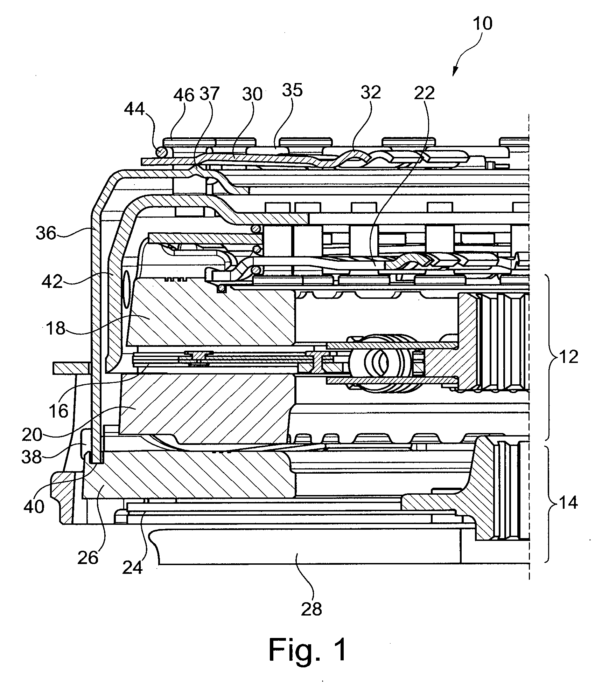

In Fig. 1 ist eine Doppelkupplung 10 mit einer ersten Reibungskupplung 12 und einer zweiten Reibungskupplung 14 dargestellt, wobei die erste Reibungskupplung 12 und die zweite Reibungskupplung 14 in einem nicht eingerückten unbetätigten Zustand dargestellt sind. Die erste Reibungskupplung 12 ist in Form einer Blechdeckeleinfachkupplung mit einer ersten Kupplungsscheibe 16 zum reibschlüssigen Verpressen zwischen einer ersten Anpressplatte 18 und einer ersten Gegenplatte 20 ausgebildet, wobei die erste Anpressplatte 18 durch Betätigen eines ersten Betätigungselementes 22 in Form einer ersten Hebelfeder, in eine axiale Richtung verlagerbar ist. Der ersten Reibungskupplung 12 ist die zweite Reibungskupplung 14 in Form einer Sicherheitsnebenabtriebskupplung mit einer zweiten Kupplungsscheibe 24 zum Verpressen zwischen einer zweiten Anpressplatte 26 und einer zweiten Gegenplatte 28 untergebaut, wobei die zweite Anpressplatte 26 bei einer Betätigung eines zweiten Betätigungselementes 30 in axialer Richtung unabhängig von der ersten Reibungskupplung 12 verlagerbar ist. Die zweite Reibungskupplung 14 ist in einem unbetätigten, geöffneten Zustand dargestellt.

Das zweite Betätigungselement 30 ist in Form einer zweiten Hebelfeder mit sich radial nach innen erstreckenden Hebelfederzungen 32 ausgebildet. Das zweite Betätigungselement 30 ist über einen Drahtspannring 34, welcher mittels Befestigungselementen 35 an den Hebelfederzungen 32 befestigt ist, in axialer Richtung vorgespannt. Die Übertragung einer Einrückbewegung bei Betätigung des vorgespannten zweiten Betätigungselementes 30 in Form der zweiten Hebelfeder erfolgt über einen Druckring 36 auf die zweite Anpressplatte 26, welche mit dem Druckring 36 verbunden ist, wobei der Druckring 36 durch eine Schraubverbindung 38 in radialer Richtung mit der zweiten Anpressplatte 26 gegen Lösen gesichert ist. Der Druckring 36 ist dabei in einer Nut 40 in der zweiten Anpressplatte 26 aufgenommen, wobei die Nut 40 in einer der zweiten Kupplungsscheibe 24 abgewandten Fläche der zweiten Anpressplatte 26 radial außenseitig ausgebildet ist.

Der Druckring 36 umfasst die erste Reibungskupplung 12 im Wesentlichen außenseitig, wobei der Druckring 36 zumindest teilweise einen Kupplungsdeckel 42 der ersten Reibungskupplung 12 durchdringt, wodurch eine Führung des Druckringes durch den Kupplungsdeckel 42 der ersten Reibungskupplung 12 gewährleistet werden kann. An dem topfartig oder topfförmig ausgebildeten Druckring 36 ist stirnseitig, an einer dem zweiten Betätigungselement 30 zugewandten Stirnseite, ein ringförmig umlaufender Wulst 37 ausgebildet, welcher das vorgespannte zweite Betätigungselement 30 kontaktiert. Der Wulst 37 kontaktiert radial innenseitig das zweite Betätigungselement 30, welches radial außenseitig von der Kontaktstelle mit dem Wulst 37 kippbar an einem Auflagedrahtring 44 abgestützt ist. Der Auflagedrahtring 44 ist radial außenseitig um mehrere Bolzen 46 herum angeordnet, welche mit dem Kupplungsdeckel 42 der ersten Reibungskupplung 12 verbunden sind. Durch den Abstand zwischen dem Auflagedrahtring 44 und dem Wulst 37 sowie der radial innenliegenden Einleitungsstelle der Einrückkraft kann eine Übersetzung der auf den Druckring 36 wirkenden Einrückkraft ermöglicht werden.

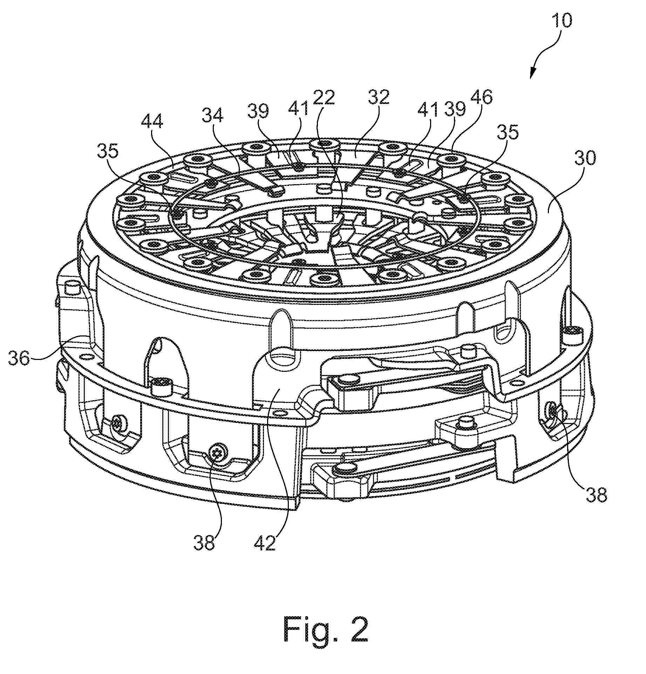

In Fig. 2 ist die Doppelkupplung 10 in einem montierten Zustand dargestellt, wobei die Hebelfederzungen 32 und Trägerzungen 39 des vorgespannten zweiten Betätigungselementes 30 in einem unbetätigten Zustand dargestellt sind. Die Hebelfederzungen 32 sind nach radial innen länger ausgebildet als die Trägerzungen 39, an denen mittels Befestigungselementen 35 in Form von Haltebolzen der Spanndrahtring 34 befestigt ist. Die Hebelfederzungen 32 und die Trägerzungen 39 sind alternierend angeordnet, wobei die Trägerzungen 39 radial auβen eine größere Breite aufweisen als die Hebelfederzungen 32. Das zweite Betätigungselement 30 liegt radial außenseitig an dem Druckring 36 an. Der Druckring 36 ragt an mehreren Stellen durch den Kupplungsdeckel 42 der ersten Reibungskupplung 12 hindurch und ist mit der zweiten Anpressplatte 26 der zweiten Reibungskupplung 14 durch Schraubverbindungen 38 lösbar verbunden.

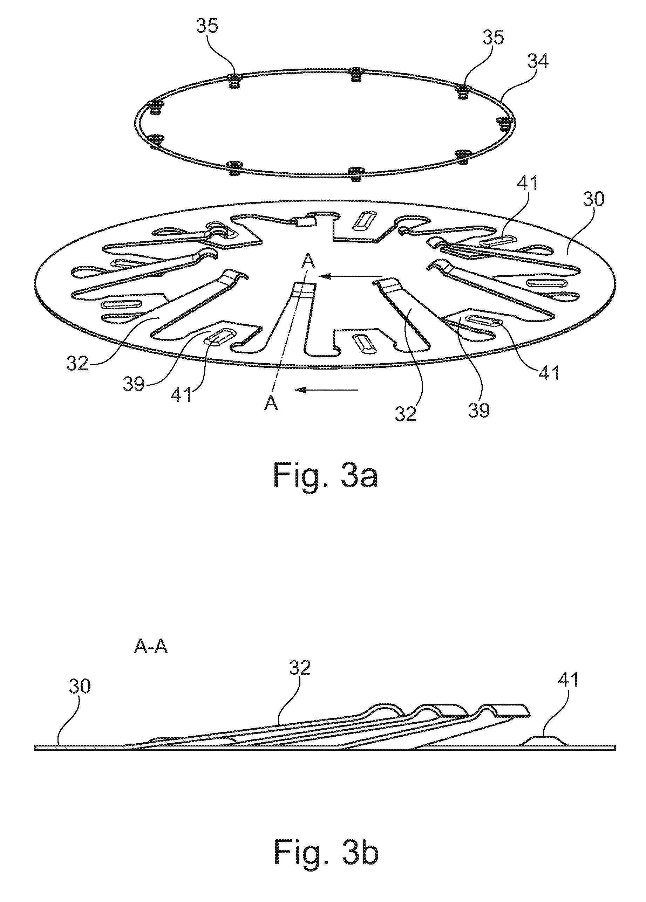

In Fig. 3a ist das zweite Betätigungselement 30 in einem unmontierten Zustand dargestellt in Form einer Hebelfeder mit einem dazu beabstandeten Spanndrahtring 34 mit Befestigungselementen 35 dargestellt. Das zweite Betätigungselement 30 weist neun radial innenseitig angeordnete Hebelfederzungen 32 und neun Trägerzungen 39 auf. Die Trägerzungen 39 weisen zur Erhöhung der Steifigkeit gegen eine axiale Verlagerung der Trägerzungen 39 jeweils eine Profilierung 41 auf. Die Profilierung 41 der Trägerzungen 39 ist jeweils in radialer Richtung entlang eines Teils der Trägerzungen 39 in Form einer Sicke ausgebildet, die beispielsweise durch Umformen hergestellt werden kann. An den Trägerzungen 39 sind in einem montierten Zustand der Doppelkupplung 10 die neun Befestigungselemente 35 befestigt, an denen radial außen der Spanndrahtring 34 zur Vorspannung des zweiten Betätigungselementes 30 angeordnet ist. Eine geschnittene Ansicht entlang der Linie A-A einer Hebelfederzunge 32 ist in Fig. 3b dargestellt, wobei die Hebelfederzungen 32 in axialer Richtung aufgestellt sind.

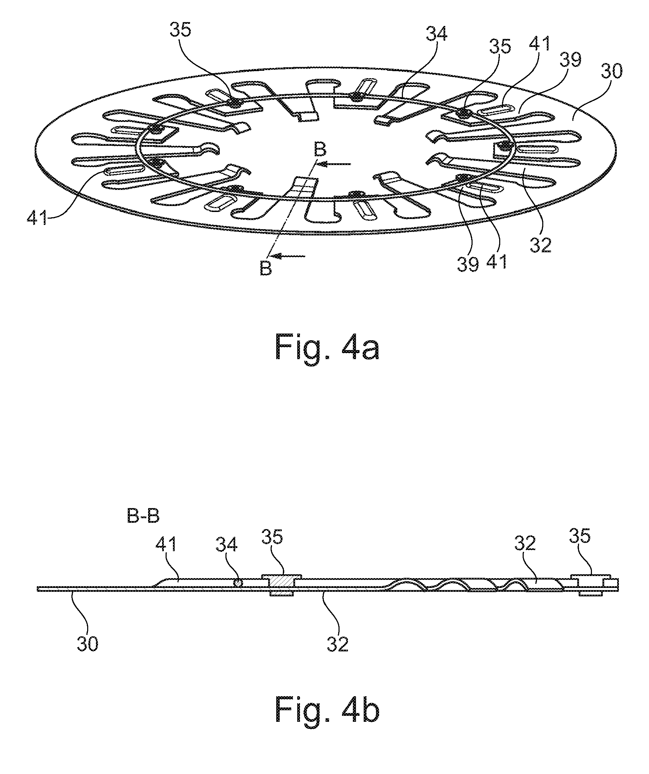

In Fig. 4a ist das zweite Betätigungselement in einem montierten Zustand dargestellt. Durch den an den Trägerzungen 39 mit den Befestigungselementen 35 befestigten Spanndrahtring 34 sind die Hebelfederzungen 32 elastisch im Wesentlichen in eine Ebene mit den Trägerzungen 39 verlagert und somit vorgespannt. Eine Schnittansicht entlang der Linie B-B einer Hebelfederzunge 32 ist in Fig. 4b dargestellt.

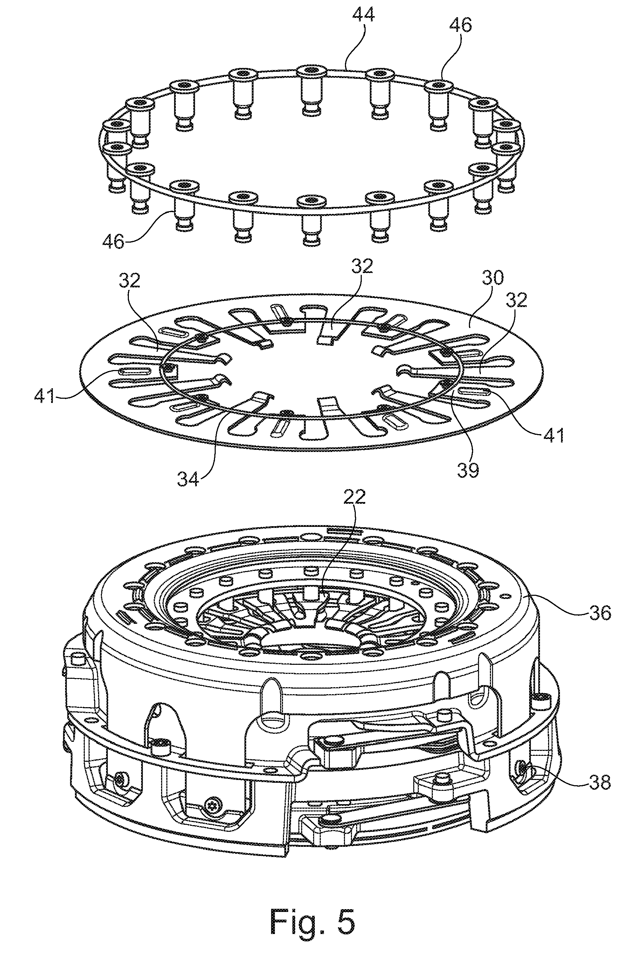

In Fig. 5 ist der Druckring 36 mit der restlichen Doppelkupplung 10 und einem beabstandeten vormontierten und vorgespannten zweiten Betätigungselement 30 dargestellt. Beabstandet zu dem Druckring 36 und dem vorgespannten zweiten Betätigungselement 30 dargestellt ist der Auflagedrahtring 44 mit den benötigten Bolzen 46 zur Befestigung an dem Kupplungsdeckel 42 der ersten Reibungskupplung 12.

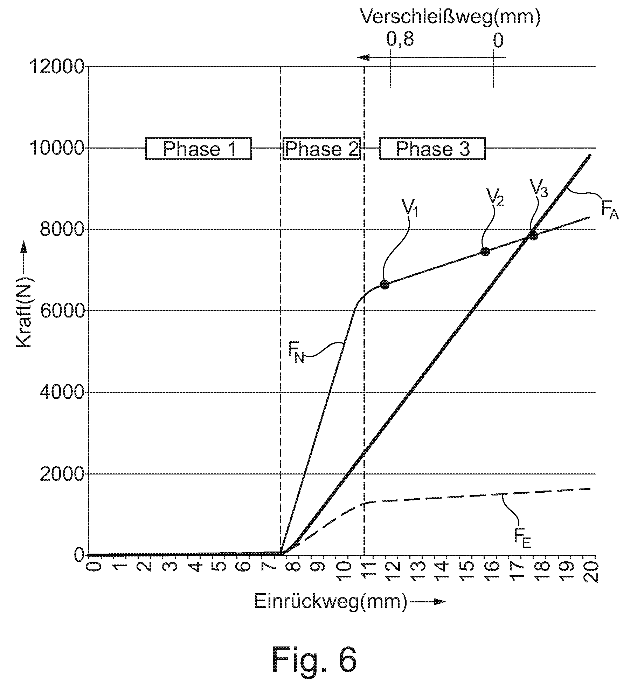

In Fig. 6 ist ein Diagramm zur Darstellung der Anpresskraft F_{N} der zweiten Reibungskupplung 14 der erfindungsgemäßen Doppelkupplung 10 im Vergleich zu einer Anpresskraft F_{A} einer herkömmlichen Doppelkupplung sowie der Einrückkraft F_{E}, welche zum Einrücken der zweiten Reibungskupplung 14 benötigt wird, dargestellt. Der Einrückvorgang der zweiten Reibungskupplung 14 kann in drei Phasen dargestellt werden. In der ersten Phase wirkt die Einrückkraft F_{E} radial innenseitig auf das vorgespannte zweite Betätigungselement 30 mit dem Spanndrahtring 34, insbesondere auf die Hebelfederzungen 32. In der ersten Phase wird dabei durch die Verlagerung der zweiten Anpressplatte 26 zunächst das Spiel zwischen der zweiten Anpressplatte 26 und der zweiten Kupplungsscheibe 24 überwunden, wobei das Spiel beispielsweise 1,3 mm betragen kann. Durch das Spiel wird in der ersten Phase keine Anpresskraft F_{N,A} erzeugt, und das vorgespannte zweite Betätigungselement 30 kippt radial außenseitig um den Auflagedrahtring 44, ihren Drehpunkt. Mit Überwindung des Spiels zwischen zweiter Anpressplatte 26 und der zweiten Kupplungsscheibe 24 beginnt die zweite Phase des Einrückvorganges, in der die zweite Anpressplatte 26 die zweite Kupplungsscheibe 24 gegen die zweite Gegenplatte 28 presst, wobei die zweite Gegenplatte 28 beispielsweise in Form eines Schwungrades ausgebildet sein kann. Durch die Ausgestaltung, insbesondere der Steifigkeiten, des vorgespannten zweiten Betätigungselementes 30, insbesondere der Hebelfederzungen 32 und Trägerzungen 39 in Verbindung mit dem Spanndrahtring 34, wird die auf den Druckring 36 wirkende Einrückkraft F_{E} übersetzt. Solange die Einrückkraft F_{E} geringer ist als die Vorspannkraft des vorgespannten zweiten Betätigungselementes 30, bleiben die Hebelfederzungen 32 gegen den Spanndrahtring 34 gespannt. Eine Verformung der Hebelfederzungen 32 findet in dem radial innen liegenden freien Ende der Hebelfederzungen 32 statt, bedingt durch die hohe Steifigkeit bei kurzem Hebelarm, wodurch ein steiler im Wesentlichen linearer Anstieg der Anpresskraft F_{N} in der zweiten Phase bei einem im Wesentlichen linearen Anstieg der Einrückkraft F_{E} ermöglicht werden.

Die dritte Phase des Einrückvorganges beginnt im Wesentlichen bei Überschreiten der Vorspannkraft des vorgespannten zweiten Betätigungselementes 30 durch die Einrückkraft F_{E}, wodurch bei zunehmendem Einrücken das gesamte zweite Betätigungselement 30, insbesondere die gesamten Hebelfederzungen 32, elastisch verformt wird. Hierbei findet die elastische Verformung im Wesentlichen in dem radial außen liegenden Bereich des zweiten Betätigungselementes 30, insbesondere der Hebelfederzungen 32, statt, bedingt durch die geringere Steifigkeit bei längerem Hebelarm. Durch die Integration zweier Steifigkeiten in das vorgespannte zweite Betätigungselement 30, insbesondere in die Hebelfederzungen 32, kann beim Einrücken eine anfänglich hohe Steifigkeit mit einer geringeren Steifigkeit in dem Eingerückten Zustand kombiniert werden. Dadurch kann im Vergleich zur zweiten Phase in der dritten Phase, dem für den Betrieb relevanten Einrückbereich, eine geringere lineare Steigung der Anpresskraft F_{N} bei zunehmendem Einrückweg ermöglicht werden. Die Kurve der Anpresskraft F_{N} flacht beim Übergang von der zweiten in die dritte Phase aufgrund der integrierten zwei Steifigkeiten deutlich ab. Der während des zuverlässigen Betriebs der zweiten Reibungskupplung 14 relevante Einrückweg setzt sich zusammen aus der Wegdifferenz zwischen dem maximalen und minimalen Einrückweg, V₃ bis V₂, und dem auftretenden Verschleiß, V₂ bis V₁, wobei bei V₂ kein Verschleiß vorliegt und bei V₁ der maximale Verschleiß von beispielsweise 0,8 mm vorliegt. Über den relevanten Einrückweg in der dritten Phase kann eine Anpresskraft F_{N} mit einer sehr geringen linearen Steigung gewährleistet werden. Die zum Betätigen der zweiten Reibungskupplung 14 benötigte Einrückkraft F_{E} weist nach einem im Wesentlichen linearen Anstieg in der zweiten Phase in der dritten Phase über den relevanten Einrückweg von V₃ über V₂ bis V₁ im Wesentlichen eine sehr geringe Steigung auf, welche annähernd konstant ist. Im Vergleich zur Anpresskraft F_{N} einer erfindungsgemäßen Doppelkupplung 10 ist die Anpresskraft F_{A} einer herkömmlichen Doppelkupplung dargestellt, die in der dritten Phase einen im Wesentlichen linearen Verlauf der Anpresskraft F_{A} aufweist, wodurch beispielsweise im Verschleißfall, V₂ bis V₁, ein erheblicher Rückgang der Anpresskraft F_{A} auftritt.

### Bezugszeichenliste

- 10: Doppelkupplung
- 12: erste Reibungskupplung
- 14: zweite Reibungskupplung
- 16: erste Kupplungsscheibe
- 18: erste Anpressplatte
- 20: erste Gegenplatte
- 22: erstes Betätigungselemente
- 24: zweite Kupplungsscheibe
- 26: zweite Anpressplatte
- 28: zweite Gegenplatte
- 30: zweites Betätigungselemente
- 32: Hebelfederzunge
- 34: Spanndrahtring
- 35: Befestigungselement
- 36: Druckring
- 37: Wulst
- 38: Schraubverbindung
- 39: Trägerzungen
- 40: Nut
- 41: Profilierung
- 42: Kupplungsdeckel
- 44: Auflagedrahtring
- 46: Bolzen

- F_{N}: Anpresskraft
- F_{E}: Einrückkraft
- F_{A}: Anpresskraft

- V₁: Verschleißbereichsende
- V₂: Verschleißbereichsanfang, minimaler Einrückweg
- V₃: maximaler Einrückweg

## Patentansprüche

1. Doppelkupplung zum Kuppeln einer Antriebswelle eines Kraftfahrzeugmotors mit einer Getriebewelle eines Kraftfahrzeuggetriebes und/oder einem Nebenabtrieb des Kraftfahrzeuges, insbesondere einer Zapfwelle, mit
einer ersten Reibungskupplung (12) zum reibschlüssigen Verpressen einer mit der Getriebewelle koppelbaren ersten Kupplungsscheibe (16) zwischen einer ersten Anpressplatte (18) und einer ersten Gegenplatte (20), wobei die erste Anpressplatte (18) zum Schließen der ersten Reibungskupplung (12) in eine Axialrichtung verlagerbar ist, einer zweite Reibungskupplung (14) zum reibschlüssigen Verpressen einer mit dem Nebenabtrieb koppelbaren zweiten Kupplungsscheibe (24) zwischen einer zweiten Anpressplatte (26) und einer zweiten Gegenplatte (28), wobei die zweite Anpressplatte (26) zum Schließen der zweiten Reibungskupplung (14) in die Axialrichtung verlagerbar ist,
einem ersten Betätigungselement (22) zum Verlagern der ersten Anpressplatte (18), einem zweiten Betätigungselement (30) zum Verlagern der zweiten Anpressplatte (26), wobei die zweite Anpressplatte (26) mit einem mit dem zweiten Betätigungselement (30) wirkverbundenen Druckring (36) zur Übertragung der Verlagerungsbewegung verbunden ist, **dadurch gekennzeichnet, dass**
das zweite Betätigungselemente (30) durch mindestens einen Spanndrahtring (34) vorgespannt ist.

2. Doppelkupplung nach Anspruch 1, **dadurch gekennzeichnet, dass** das zweite Betätigungselement (30) eine Hebelfeder mit nach radial innen gerichteten Hebelfederzungen (32) ist, wobei der Spanndrahtring (34) an den Hebelfederzungen (32) angeordnet ist.

3. Doppelkupplung nach Anspruch 2, **dadurch gekennzeichnet, dass** die Hebelfeder (30) Trägerzungen (39) zur Lagerung des Spanndrahtringes (34) aufweist.

4. Doppelkupplung nach Anspruch 3
**dadurch gekennzeichnet, dass** die Hebelfederzungen (32) und die Trägerzungen (39) alternierend angeordnet sind.

5. Doppelkupplung nach einem der Anpsrüche 3 oder 4
**dadurch gekennzeichnet, dass** die Trägerzungen (39) Befestigungselemente (35) zur Befestigung des Spanndrahtringes (34) an den Trägerzungen (39) aufweisen.

6. Doppelkupplung nach einem der Ansprüche 3 bis 5
**dadurch gekennzeichnet, dass** die Trägerzungen (39) radial nach innen gerichtet eine geringere Länge aufweisen als die Hebelfederzungen (32).

7. Doppelkupplung nach einem der Ansprüche 3 bis 6
**dadurch gekennzeichnet, dass** die Trägerzungen (39) zumindest teilweise eine Profilierung (41) aufweisen.

8. Doppelkupplung nach Anspruch 7, **dadurch gekennzeichnet, dass** die Profilierung (41) in Form einer Sicke ausgebildet ist.

9. Getriebestrang mit mindestens einer Doppelkupplung (10) zum Kuppeln einer Antriebswelle eines Kraftfahrzeugmotors mit einer Getriebewelle eines Kraftfahrzeuggetriebes und/oder einem Nebenabtrieb des Kraftfahrzeuges für ein Kraftfahrzeug nach einem der Ansprüche 1 bis 8.

## Claims

1. Double clutch for coupling a drive shaft of a motor vehicle engine to a transmission shaft of a motor vehicle transmission and/or a power take-off of the motor vehicle, in particular a power take-off shaft, having
a first friction clutch (12) for pressing a first clutch plate (16) which can be coupled to the transmission shaft between a first pressure plate (18) and a first counterplate (20) in a frictionally locking manner,
it being possible for the first pressure plate (18) to be moved in an axial direction in order to close the first friction clutch (12),
a second friction clutch (14) for pressing a second clutch plate (24) which can be coupled to the power take-off between a second pressure plate (26) and a second counterplate (28) in a frictionally locking manner,
it being possible for the second pressure plate (26) to be moved in the axial direction in order to close the second friction clutch (14),
a first actuating element (22) for moving the first pressure plate (18),
a second actuating element (30) for moving the second pressure plate (26),
the second pressure plate (26) being connected to a thrust ring (36) which is operatively connected to the second actuating element (30) in order to transmit the displacement movement, **characterized in that** the second actuating element (30) is prestressed by means of at least one tensioning wire ring (34).

2. Double clutch according to Claim 1, **characterized in that** the second actuating element (30) is a lever spring with radially inwardly directed lever spring tongues (32), the tensioning wire ring (34) being arranged on the lever spring tongues (32).

3. Double clutch according to Claim 2, **characterized in that** the lever spring (30) has carrier tongues (39) for mounting the tensioning wire ring (34).

4. Double clutch according to Claim 3, **characterized in that** the lever spring tongues (32) and the carrier tongues (39) are arranged in an alternating manner.

5. Double clutch according to either of Claims 3 and 4, **characterized in that** the carrier tongues (39) have fastening elements (35) for fastening the tensioning wire ring (34) to the carrier tongues (39).

6. Double clutch according to one of Claims 3 to 5, **characterized in that** the carrier tongues (39) have a smaller length in a radially inwardly directed manner than the lever spring tongues (32).

7. Double clutch according to one of Claims 3 to 6, **characterized in that** the carrier tongues (39) at least partially have a profiling (41).

8. Double clutch according to Claim 7, **characterized in that** the profiling (41) is configured in the form of a bead.

9. Transmission train having at least one double clutch (10) for coupling a drive shaft of a motor vehicle engine to a transmission shaft of a motor vehicle transmission and/or a power take-off of the motor vehicle for a motor vehicle according to one of Claims 1 to 8.

## Revendications

1. Embrayage double pour coupler un arbre d'entraînement d'un moteur de véhicule automobile avec un arbre de transmission d'une transmission du véhicule automobile et/ou une sortie de puissance auxiliaire du véhicule automobile, notamment un arbre de prise de force, comprenant :
un premier embrayage à friction (12) pour presser par friction un premier disque d'embrayage (16) pouvant être couplé avec l'arbre de transmission entre une première plaque de pressage (18) et une première plaque opposée (20), la première plaque de pressage (18) pouvant être déplacée dans une direction axiale afin de fermer le premier embrayage à friction (12),
un deuxième embrayage à fiction (14) pour presser par friction un deuxième disque d'embrayage (24) pouvant être couplé avec la sortie de puissance auxiliaire entre une deuxième plaque de pressage (26) et une deuxième plaque opposée (28), la deuxième plaque de pressage (26) pouvant être déplacée dans la direction axiale afin de fermer le deuxième embrayage à friction (14),
un premier élément d'actionnement (22) pour déplacer la première plaque de pressage (18), un deuxième élément d'actionnement (30) pour déplacer la deuxième plaque de pressage (26), la deuxième plaque de pressage (26) étant reliée avec une bague de pression (36) reliée fonctionnellement avec le deuxième élément d'actionnement (30) afin de transmettre le mouvement de déplacement, **caractérisé en ce que**
le deuxième élément d'actionnement (30) est précontraint par au moins un anneau de fil de tension (34).

2. Embrayage double selon la revendication 1, **caractérisé en ce que** le deuxième élément d'actionnement (30) est un ressort à levier avec des languettes de ressort à levier (32) orientées radialement vers l'intérieur, dans lequel l'anneau de fil de tension (34) est disposé sur les languettes de ressort à levier (32).

3. Embrayage double selon la revendication 2, **caractérisé en ce que** le ressort à levier présente des languettes porteuses (39) pour supporter l'anneau de fil de tension.

4. Embrayage double selon la revendication 3, **caractérisé en ce que** les languettes de ressort à levier (32) et les languettes porteuses (39) sont disposées en alternance.

5. Embrayage double selon l'une des revendications 3 ou 4, **caractérisé en ce que** les languettes porteuses (39) présentent des éléments de fixation (35) pour fixer l'anneau de fil de tension (34) sur les languettes porteuses (39).

6. Embrayage double selon l'une des revendications 3 à 5, **caractérisé en ce que** les languettes porteuses (39) orientées radialement vers l'intérieur présentent une longueur moindre que les languettes de ressort à levier (32).

7. Embrayage double selon l'une des revendications 3 à 6, **caractérisé en ce que** les languettes porteuses (39) présentent au moins partiellement un profilage (41).

8. Embrayage double selon la revendication 7, **caractérisé en ce que** le profilage (41) est réalisé sous la forme d'une moulure.

9. Train de transmission comportant au moins un embrayage double (10) pour coupler un arbre d'entraînement d'un moteur de véhicule automobile avec un arbre de transmission d'une transmission de véhicule automobile et/ou une sortie de puissance auxiliaire du véhicule automobile pour un véhicule automobile selon l'une des revendications 1 à 8.
